# EUROPÄISCHE PATENTSCHRIFT

(11) **EP 2 490 921 B1**
(45) Veröffentlichungstag und Bekanntmachung des Hinweises auf die Patenterteilung: **13.05.2015**
(21) Anmeldenummer: 10774124.1
(22) Anmeldetag: 15.09.2010
(51) Int. Cl.: B60R 1/00

(54) **VERFAHREN ZUR FAHRERINFORMATION**
DRIVER INFORMATION METHOD
PROCEDE D'INFORMATION DU CONDUCTEUR

(30) Priorität: 23.10.2009 DE 102009050519
(43) Veröffentlichungstag der Anmeldung: 29.08.2012
(73) Patentinhaber: Bayerische Motoren Werke Aktiengesellschaft, 80809 München (DE)
(72) Erfinder: WALESSA, Marc, 80999 Muenchen (DE); OSZWALD, Florian, 80339 Muenchen (DE); DEBON, Renaud, 80379 München (DE); BARMEYER, Thomas, 80935 Muenchen (DE)
(86) Internationale Anmeldenummer: PCT/EP2010/005653
(87) Internationale Veröffentlichungsnummer: WO 2011/047756

(56) Entgegenhaltungen:
- EP-A1- 1 760 489
- EP-A1- 1 842 726
- WO-A1-02/09433
- DE-A1-102006 008 703
- DE-A1-102008 001 991
- US-A1- 2006 119 472

## Beschreibung

Die Erfindung betrifft ein Verfahren zur Fahrerinformation in einem Kraftfahrzeug, bei dem durch zumindest eine an dem Kraftfahrzeug angebrachte Seitenkamera ein Umgebungsbild aufgenommen wird, welches einen im Wesentlichen seitlich bezüglich des Kraftfahrzeugs angeordneten Aufnahmebereich enthält, und bei dem auf einer vom Fahrer des Kraftfahrzeugs einsehbaren Anzeigeeinheit ein Anzeigebild ausgegeben wird, welches eine gegebenenfalls grafisch aufbereitete, vorzugsweise im Wesentlichen fotorealistische, Wiedergabe des Umgebungsbilds umfasst.

Ein solches Verfahren ist beispielsweise bekannt aus der DE 10 2007 024 752 A1.

Ein solches Verfahren liegt auch dem Ausfahrtkamerasystem zugrunde, das für Fahrzeuge der Anmelderin unter der Bezeichnung "SideView" marktverfügbar ist. Ein solches Ausfahrtkamerasystem kann beispielsweise eine Kamera (dann vorzugsweise kombiniert mit Prisma und/oder Weitwinkeloptik) oder zwei Kameras umfassen, die von einer weit vorne am Fahrzeug befindlichen Aufnahmeposition aus, etwa am vorderen Stoßfänger oder im vorderen Bereich eines vorderen Kotflügels, einen seitlichen Aufnahmebereich aufnehmen. Die Kameras bzw. ihre Hauptaufnahmerichtung können beispielsweise im Wesentlichen senkrecht zur Fahrtrichtung ausgerichtet sein. Durch die kamerabasierte Aufnahme eines Seitenbildes und dessen Darstellung an den Fahrer wird dem Fahrer eine verbesserte, insbesondere eine besonders frühzeitig verfügbare Übersicht über den Verkehr, beispielsweise an unübersichtlichen Ausfahrten, vermittelt.

Zu Gunsten einer knappen und prägnanten Ausdrucksweise wird im Folgenden der Begriff "Seitensichtsystem" verwendet. Als Seitensichtsystem soll dabei jedes zur Durchführung eines gattungsgemäßen Verfahrens geeignete System angesehen werden, d.h. jedes System, bei dem kamerabasiert ein Umgebungsbild aufgenommen wird, welches einen im Wesentlichen seitlich bezüglich des Kraftfahrzeugs angeordneten Aufnahmebereich enthält, und bei dem auf einer vom Fahrer des Kraftfahrzeugs einsehbaren Anzeigeeinheit, z.B. einem Central Information Display (kurz: CID) ein Anzeigebild ausgegeben wird, welches eine gegebenenfalls grafisch aufbereitete, vorzugsweise im Wesentlichen fotorealistische, Wiedergabe des Umgebungsbilds umfasst.

Bereits die heute bekannten Seitensichtsysteme bieten ihren Nutzern einen erheblichen Komfortgewinn und Sicherheitszuwachs. Dennoch greifen manche Nutzer noch nicht in jeder geeigneten Situation auf die Unterstützung eines solchen Seitensichtsystems zurück. Beispielsweise scheut mancher Nutzer den Aufwand der Betätigung eines Tasters zur Aktivierung des Systems. Gleichzeitig ist eine dauerhafte Aktivierung meist unerwünscht.

Aus der DE 103 15 047 A1 sind Vorgehensweisen zur selbsttätigen Steuerung von Fahrzeugfunktionen in Abhängigkeit von einer Positionshistorie und/oder von Kartendaten bekannt. Auf die komplexe Problemstellung eines Seitensichtsystems sind diese Vorgehensweisen jedoch nicht übertragbar.

Aus der DE 10 2006 008703 A1 ist ein Fahrzeug mit mehreren an Endteilen des Fahrzeugs angeordneten Kameras und einem Fahrerunterstützungssystem zur Anzeige eines Umgebungsbilds bekannt. Eine Steuerschaltung steuert einen Anzeigevorgang einer Anzeigeeinrichtung auf der Grundlage einer erfassten Ist-Position des Fahrzeugs und Straßenkarteninformationen. Das hier offenbarte Verfahren ist nächstliegend zum Gegenstand des Anspruchs 1.

Es ist eine Aufgabe der vorliegenden Erfindung, den praktischen Nutzen eines gattungsgemäßen Verfahrens zur Fahrerinformation zu erhöhen.

Gelöst wird diese Aufgabe durch ein Verfahren gemäß Anspruch 1. Vorteilhafte Ausführungsformen und Weiterbildungen der Erfindung ergeben sich aus den abhängigen Ansprüchen.

Erfindungsgemäß erfolgt zumindest die Ausgabe des Anzeigebilds nur temporär, kann aber selbsttätig gestartet werden. Dies geschieht auf die Detektion einer Blickverdeckungssituation hin, in der eine seitliche Blickverdeckung des Fahrers anzunehmen ist. Detektiert wird eine solche Blickverdeckungssituation auf Basis von Abstandssignalen zumindest eines nicht kamerabasierten Umfelderfassungssystems.

Der Einbezug von Abstandssignalen zumindest eines nicht kamerabasierten Umfelderfassungssystems erhöht die Robustheit des Gesamtverfahrens.

Die Nutzung von Abstandssignalen zumindest eines nicht kamerabasierten Umfelderfassungssystems ermöglicht zudem die Mehrfachnutzung nicht kamerabasierter Fahrzeugkomponenten, etwa eines in modernen Kraftfahrzeugen üblicherweise verfügbaren Parkhilfesystems.

Das nicht kamerabasierte Umfelderfassungssystem ist als ultraschallbasiertes Parkhilfesystem (z.B. PDC in Fahrzeugen der Anmelderin) ausgebildet. Insbesondere ist es vorteilhaft, mit Hilfe eines solchen Systems Hindernisse in der Umgebung des Kraftfahrzeugs zu detektieren und zu klassifizieren (z.B. bewegt vs. nicht bewegt) und die Erkennung einer Blickverdeckungssituation davon abhängig zu machen, ob die Anwesenheit zumindest eines Hindernisses einer bestimmten Klasse (z.B. nicht bewegt) gegeben ist und dieses zumindest eine Hindernis sich in einer bestimmten relativen Position zu dem Kraftfahrzeug befindet. Beispielsweise kann geprüft werden, ob sich ein "konstantes", d.h. nicht bewegtes, Hindernis frontal vor dem Fahrzeug befindet und/oder ob sich ein nicht bewegtes Hindernis seitlich links und/oder seitlich rechts von dem Fahrzeug befindet und/oder ob sich sogar links und rechts jeweils zumindest ein nicht bewegtes Hindernis befinden.

Die Aktivierung der Ausgabe des Anzeigebilds bleibt durch die Erfindung auf solche Situationen beschränkt, in denen das Seitensichtsystem den Fahrer besonders sinnvoll zu unterstützen vermag. In allen übrigen Situationen wird der Fahrer nicht durch die Ausgabe des Anzeigebilds von seiner Fahraufgabe abgelenkt.

Unter Anwendung der Erfindung wird ein Seitensichtsystem in der Praxis häufiger genutzt und bringt zusätzliche Sicherheit für den Fahrer. Durch die automatische bzw. selbsttätige Aktivierung wird der Fahrer in potenziell kritischen Fahrsituationen entlastet und kann sich auf andere Aufgaben konzentrieren.

Gemäß einer bevorzugten Ausführungsform der vorliegenden Erfindung erfolgt auch die Aufnahme des Umgebungsbilds nur temporär. Auch sie kann insbesondere nur bzw. erst auf die Detektion der Blickverdeckungssituation hin gestartet werden.

Alternativ kann die Aufnahme des Umgebungsbilds ständig - gewissermaßen im Hintergrund - ablaufen, ohne dass ein Anzeigebild ausgegeben wird. Ebenso kann die Aufnahme des Umgebungsbilds bereits früher gestartet werden als die Ausgabe des Anzeigebilds. Beispielsweise kann die Aufnahme des Umgebungsbilds an eine geringere Anzahl von Kriterien und/oder an niedrigere Anforderungen geknüpft werden als die Ausgabe des Anzeigebilds. So kann erreicht werden, dass bereits Umgebungsbilder vorliegen, wenn schließlich ein Anzeigebild ausgegeben werden soll. Gegebenenfalls kann so auch erreicht werden, dass eine Bildverarbeitung der Umgebungsbilder bereits Ergebnisse zu liefern vermag, wenn schließlich ein Anzeigebild ausgegeben werden soll.

Gemäß einer bevorzugten Ausführungsform der Erfindung beruht die Detektion der Blickverdeckungssituation zudem auf Ergebnissen einer Bildverarbeitung des Umgebungsbilds der zumindest einen Seitenkamera. Insbesondere kann diese Bildverarbeitung ein Motion-Stereo-Verfahren umfassen.

Gemäß einer weiteren bevorzugten Ausführungsform der Erfindung beruht die Detektion der Blickverdeckungssituation zudem auf dem Ergebnis einer Bestimmung der Fahrgeschwindigkeit des Kraftfahrzeugs. Insbesondere kann geprüft werden, ob die Fahrgeschwindigkeit einen bestimmten vorgegebenen Wert unterschreitet, also langsam gefahren wird. Es kann alternativ oder zusätzlich auch geprüft werden, ob ein Fahrzeugstillstand erreicht worden ist.

Gemäß einer weiteren bevorzugten Ausführungsform der Erfindung beruht die Detektion der Blickverdeckungssituation zudem auf dem Ergebnis einer Bestimmung des Lenkwinkels des Kraftfahrzeugs. Insbesondere kann geprüft werden, ob der Lenkwinkel einen bestimmten vorgegebenen Absolutwert unterschreitet.

Gemäß einer weiteren bevorzugten Ausführungsform der Erfindung beruht die Detektion der Blickverdeckungssituation zudem auf dem Ergebnis einer Bestimmung der Gangwahl des Kraftfahrzeugs. Insbesondere kann geprüft werden, ob ein Vorwärtsgang des Fahrzeugs eingelegt ist.

Gemäß einer weiteren bevorzugten Ausführungsform der Erfindung beruht die Detektion der Blickverdeckungssituation zudem auf dem Ergebnis einer Bestimmung der geographischen Position des Kraftfahrzeugs. Insbesondere kann geprüft werden, ob das Kraftfahrzeug sich in der Umgebung einer Kreuzung und/oder auf einer mehrspurigen Straße und/oder auf Privatgelände und/oder auf einer öffentlichen Straße befindet.

Eine selbsttätige Aktivierung der Ausgabe kann (unter Auslassung des zur Erfindung gehörigen Merkmals, dass auf Basis von Abstandssignalen zumindest eines nicht kamerabasierten Umfelderfassungssystems eine Blickverdeckungssituation detektiert wird, in der eine seitliche Blickverdeckung des Fahrers anzunehmen ist) grundsätzlich auch ausschließlich basierend auf dem Ergebnis einer Bestimmung der geographischen Position des Kraftfahrzeugs vorgenommen werden.

Gemäß einer weiteren bevorzugten Ausführungsform der Erfindung beruht die Detektion der Blickverdeckungssituation zudem auf dem Ergebnis einer Bestimmung der Zeit, die seit dem Motorstart des Kraftfahrzeugs vergangen ist. Insbesondere kann geprüft werden, ob der Motor des Fahrzeugs innerhalb einer vorgegebenen zurückliegenden Zeitspanne gestartet worden ist und/oder ob in dieser Zeitspanne ein Start/Stopp-Knopf des Kraftfahrzeugs betätigt worden ist.

Gemäß einer weiteren bevorzugten Ausführungsform der Erfindung beruht die Detektion der Blickverdeckungssituation zudem auf dem Ergebnis einer Bestimmung einer Bremsbetätigung des Kraftfahrzeugs.

Gemäß einer weiteren bevorzugten Ausführungsform der Erfindung beruht die Detektion der Blickverdeckungssituation zudem auf dem Ergebnis einer Bestimmung des Aktivierungszustands eines Fahrtrichtungsanzeigers (Blinkers) des Kraftfahrzeugs.

Gemäß einer weiteren bevorzugten Ausführungsform der Erfindung beruht die Detektion der Blickverdeckungssituation zudem auf dem Ergebnis einer Bestimmung der Beleuchtungssituation im Umfeld des Kraftfahrzeugs.

Gemäß einer weiteren bevorzugten Ausführungsform der Erfindung kann die Ausgabe des Anzeigebilds auch manuell gestartet werden, etwa durch Betätigung eines Tasters oder durch Anwahl eines Menüpunkts aus einer Menüstruktur.

Gemäß einer weiteren bevorzugten Ausführungsform der Erfindung wird bildverarbeitungsgestützt die aktuelle Verkehrssituation abgeschätzt, um die Ausgabe des Anzeigebilds nur bedarfsgerecht zu aktivieren.

Gemäß einer weiteren bevorzugten Ausführungsform der Erfindung wird die Ausgabe des Anzeigebilds zudem selbsttätig gestartet, wenn das Kraftfahrzeug eine von mehreren vorgegebenen geographischen Positionen erreicht. Das System kann hierzu beispielsweise eine Historie von so genannten Geotags erstellen, an denen die Ausgabe in der Vergangenheit typischerweise manuell gestartet worden ist. Dadurch kann eine Annahme getroffen werden, wann die Ausgabe typischerweise vom Fahrer benötigt bzw. gewünscht wird. Außerdem kann dem Fahrer die Möglichkeit gegeben werden, einen Geotag explizit zu speichern oder zu löschen, um so sein System "anzulernen". Das Speichern könnte z.B. über einen Tasterlangdruck kommandierbar sein. Die als Aktivierungspositionen dienenden Geotags könnten auch nutzerindividuell im Fahrzeug gespeichert werden, sodass ein durch einen bestimmten Fahrzeugschlüssel identifizierter Nutzer auf seine persönlichen Geotags zurückgreifen kann.

Gemäß einer weiteren bevorzugten Ausführungsform der Erfindung wird die Ausgabe des Anzeigebilds zudem selbsttätig gestartet, wenn anhand einer Bestimmung der Eigenposition des Fahrzeugs sowie anhand von Kartendaten eines Navigationssystems erkannt wird, dass sich das Kraftfahrzeug an einer Straßenkreuzung befindet (bzw. sich dieser nähert), an der die Ausgabe hilfreich erscheint. Bei Nichtverfügbarkeit eines GPS-Signals, wie z.B. in einer Tiefgarage, kann eine geeignete Aktivierungssituation gegebenenfalls dennoch durch Analyse von Umweltbedingungen (Umgebungsbeleuchtung, Videodaten von Kameras, PDC, usw.) und Fahrzeugzustand (Motorstart, Geschwindigkeit, Blinkerzustand, usw.) erkannt werden.

Besonders vorteilhaft erscheint eine kombinierte Auswertung mehrerer Informationsquellen (z.B. zwei, drei oder vier Informationsquellen aus der Quellenmenge: Geotag-Historie, Kartendaten, Bildverarbeitung, Fahrzeugzustände) und die Anknüpfung eines selbsttätigen Starts der Ausgabe des Anzeigebilds an das Ergebnis der Auswertung.

Bei intelligenter Auswertung ist eine automatische, bedarfsgerechte Aktivierung der Ausgabe erreichbar, ohne dabei allzu "aufdringlich" für den Fahrer zu erscheinen. Im Extremfall können sogar die Bedienmittel für eine manuelle Aktivierung (z.B. Taster) entfallen.

Vorzugsweise sind für eine automatische Aktivierung der Ausgabe des Anzeigebilds bestimmte charakteristische Aktivierungssituationen definiert, die sich durch die vollständige (ggf. auch nur überwiegende) Erfüllung bestimmter vorgegebener Bedingungen auszeichnen, insbesondere beruhend auf einer oder mehreren der Informationsquellen: Kartendaten, Bildverarbeitung, Fahrzeugzustände.

Gemäß einer bevorzugten Ausführungsform der Erfindung betrifft zumindest eine solche charakteristische Aktivierungssituation den Fall eines parallel vorwärts erfolgenden Ausparkens.

Gemäß einer weiteren bevorzugten Ausführungsform der Erfindung betrifft zumindest eine solche charakteristische Aktivierungssituation den Fall einer vorwärts erfolgenden Durchfahrt durch eine enge Ausfahrt.

Gemäß einer bevorzugten Ausführungsform der Erfindung betrifft zumindest eine solche charakteristische Aktivierungssituation den Fall eines Einbiegens oder Abbiegens auf eine Querstraße mit verdeckter Einsicht.

Im Folgenden wird anhand der einzigen beigefügten Zeichnung ein bevorzugtes Ausführungsbeispiel der Erfindung beschrieben. Daraus ergeben sich weitere Details, bevorzugte Ausführungsformen und Weiterbildungen der Erfindung. Dabei zeigt schematisch

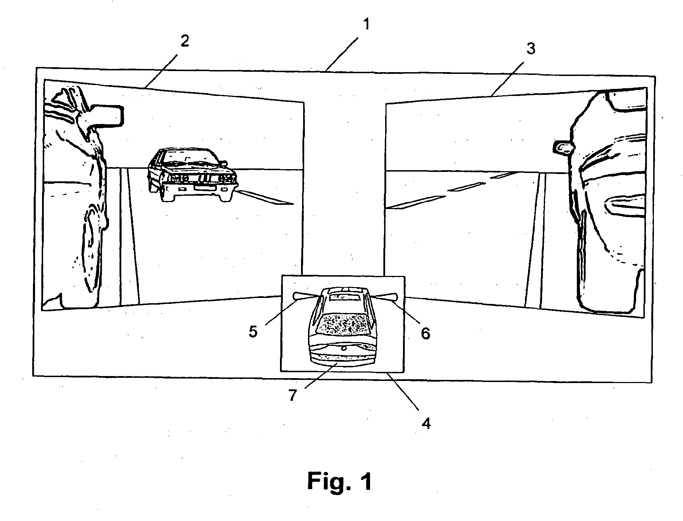

Fig. 1 ein Anzeigebild eines Seitensichtsystems mit zwei Seitenkameras.

Es wird exemplarisch ausgegangen von einem Kraftfahrzeug, das ausgerüstet ist mit einem Seitensichtsystem, das zwei Seitenkameras umfasst, die in den vorderen Stoßfängern des Kraftfahrzeugs links und rechts positioniert und orthogonal zur Fahrtrichtung ausgerichtet sind. Die von diesen Seitenkameras aufgenommenen zwei Videobilder (Umgebungsbilder) werden durch ein Steuergerät des Kraftfahrzeugs erfasst und zusammen zu einem Anzeigebild (vgl. Rechteck 1 in Fig. 1) verarbeitet bzw. aufbereitet. In dem Anzeigebild können auch Abstandsmarkierungen mittels Augmentierung eingezeichnet werden, etwa gemäß der Lehre der DE 10 2007 024 752 A1. Dargestellt wird das Anzeigebild im Central Information Display (CID) des Kraftfahrzeugs.

Das Anzeigebild 1 umfasst, zur besseren Orientierung des Fahrers leicht perspektivisch verzerrt, Umgebungsanzeigebilder 2 und 3, die jeweils im Wesentlichen dem von einer Seitenkamera aufgenommene Umgebungsbild entsprechen. In einem zwischen den Umgebungsanzeigebildern 2 und 3 zentral angeordneten Anzeigefeld 4 ist ein Abbild 7 des Kraftfahrzeugs dargestellt sowie zwei virtuelle Bereichsanzeigeobjekte 5 und 6. Durch das Abbild und die Bereichsanzeigeobjekte 5 und 6 wird für den Betrachter veranschaulicht, wie die Aufnahmebereiche der Umgebungsbilder relativ zum Kraftfahrzeug angeordnet sind.

Die Ausgabe des Anzeigebilds auf dem CID ist vom Fahrer des Kraftfahrzeugs durch Betätigung eines Tasters oder durch Auswahl eines entsprechenden Menüpunkts in einer Menüstruktur aktivierbar. Bei Überschreiten eines vorgegebenen Werts der Fahrgeschwindigkeit wird die Ausgabe automatisch wieder beendet bzw. ausgeschaltet.

Durch die Notwendigkeit der Betätigung eines Tasters oder der Auswahl eines entsprechenden Menüpunkts kann es vorkommen, dass die Funktion in manchen Situationen, in welchen sie von großem Nutzen wäre, nicht zur Verfügung steht - etwa weil der Fahrer nicht die Zeit findet, sie zu aktivieren.

Das Beispielsystem verfügt zur Lösung dieses Problems über die Möglichkeit einer automatischen Systemaktivierung an bestimmten Positionen und/oder in bestimmten Situationen und/oder unter bestimmten Bedingungen.

Definiert sind insbesondere die nachfolgend beschriebenen charakteristischen Aktivierungssituationen für eine automatische Aktivierung der Ausgabe des Anzeigebilds - vorzugsweise ohne Auswertung so genannter Geotags. Die benötigten Daten für die erforderliche Umfeldinterpretation werden dabei über ein ultraschallbasiertes Parkhilfesystem (z.B. PDC/PMA) und/oder ein Navigationssystem und/oder eine Bildverarbeitung mit Motion-Stereo-Verfahren und vorhandene CAN-Botschaften bereitgestellt. Die dargestellten Vorgehensweisen stellen teils hohe (hier nicht näher spezifizierte) Anforderungen an die Genauigkeit der Navigationslokalisation bzw. der Abdeckung und Reichweite von PDC/PMA und Bildverarbeitung (Motion-Stereo), die im Folgenden jedoch jeweils als erfüllt angesehen werden.

Eine erste charakteristische Aktivierungssituation repräsentiert den Fall eines parallel vorwärts erfolgenden Ausparkens. Erkannt wird diese Aktivierungssituation bei vollständiger (ggf. auch nur überwiegender) Erfüllung der nachfolgenden Bedingungen:
- Starten des Motors mit Start/Stopp-Knopf (innerhalb vorgegebener zurückliegender Zeitspanne)
- Einlegen eines Vorwärtsgang / Stufe D (innerhalb vorgegebener zurückliegender Zeitspanne)
- mittels PDC/PMA Erkennung jeweils zumindest eines "konstanten" (d.h. nicht bewegten) Hindernisses/Objekts in unmittelbarer Nähe seitlich links und seitlich rechts bezüglich des Kraftfahrzeugs (ein Hindernis/Objekt auf nur einer Seite verringert die Wahrscheinlichkeit des Vorliegens einer Quer-/Schräg-Parksituation erheblich)
- mittels PDC/PMA vorne Erkennung "kein Fronthindernis, Fahrweg frei"
- Eigenposition abseits Straßen bestimmter Kategorie (zur Vermeidung von Falschaktivierungen an Kreuzungen oder im Stau, insbesondere keine Kreuzung, keine mehrspurige Straße)

Der Einsatz von Motion-Stereo-basierten Bildverarbeitungsverfahren zur Erkennung von Verdeckungsbereichen ist im Zusammenhang mit dieser ersten charakteristischen Aktivierungssituation insbesondere dann nicht möglich, wenn eine Aktivierung bereits im Stillstand erfolgen soll.

Eine zweite charakteristische Aktivierungssituation repräsentiert den Fall einer vorwärts erfolgenden Durchfahrt durch eine enge (Tor-)Ausfahrt. Erkannt wird diese Aktivierungssituation bei vollständiger (ggf. auch nur überwiegender) Erfüllung der nachfolgenden Bedingungen:
- langsame Fahrt (niedrige Gaspedalstellung und/oder Geschwindigkeit kleiner als ein vorgegebener Wert v_langsam)
- ggf. nach vorherigem Fahrzeugstillstand: Bremsbetätigung
- näherungsweise Geradeausfahrt (kleiner Lenkwinkel)
- mittels PDC/PMA vorne Erkennung "kein Fronthindernis, Fahrweg frei"
- mittels PDC/PMA Erkennung jeweils zumindest eines "konstanten" (d.h. nicht bewegten) Hindernisses/Objekts in unmittelbarer Nähe seitlich links und seitlich rechts bezüglich des Kraftfahrzeugs
- Eigenposition abseits Straßen bestimmter Kategorie (zur Vermeidung von Falschaktivierungen an Kreuzungen oder im Stau, insbesondere keine Kreuzung, keine mehrspurige Straße, bevorzugt Position auf Privatgelände oder Parkplatz, d.h. (noch) nicht auf öffentlicher Straße)
- mittels PDC/PMA und/oder mittels Bildverarbeitung mit Motion-Stereo-Verfahren Erkennung eines Wechsels bzw. Übergangs von der Detektion von Hindernissen/Objekten (links und rechts) zur Detektion von Freiraum (links und rechts)

Eine dritte charakteristische Aktivierungssituation repräsentiert den Fall eines Einbiegens/Abbiegens auf eine Querstraße mit verdeckter Einsicht. Erkannt wird diese Aktivierungssituation bei vollständiger (ggf. auch nur überwiegender) Erfüllung der nachfolgenden Bedingungen:
- langsame Fahrt (niedrige Gaspedalstellung und/oder Geschwindigkeit kleiner als ein vorgegebener Wert v_langsam)
- ggf. nach vorherigem Fahrzeugstillstand: Bremsbetätigung
- näherungsweise Geradeausfahrt (kleiner Lenkwinkel)
- mittels PDC/PMA vorne Erkennung "kein Fronthindernis, Fahrweg frei"
- mittels PDC/PMA Erkennung jeweils zumindest eines "konstanten" (d.h. nicht bewegten) Hindernisses/Objekts in unmittelbarer Nähe seitlich links und seitlich rechts bezüglich des Kraftfahrzeugs
- Eigenposition abseits Straßen bestimmter Kategorie (zur Vermeidung von Falschaktivierungen an Kreuzungen oder im Stau, hier insbesondere Eigenposition an einspurigen Kreuzungen in Wohngebieten)
- mittels PDC/PMA und/oder mittels Bildverarbeitung mit Motion-Stereo-Verfahren (bevorzugt wegen höherer Reichweite) Erkennung eines Wechsels bzw. Übergangs von der Detektion von Hindernissen/Objekten (links und rechts) zur Detektion von Freiraum (links und rechts)

Zur weiteren Absicherung von Falschauslösungen kann darüber hinaus eine zusätzliche aktive Triggerung durch den Fahrer, z.B. durch Abbremsen oder kurzzeitigen Fahrzeugstillstand, vor dem Aktivierungszeitpunkt herangezogen werden. Durch geeignete Kombination von Umfelderkennung und Fahrerverhalten lässt sich eine erhöhte Erkennungsrate bei geringerer Falscherkennungsrate für eine (semi-)automatische Aktivierung ohne Tasterbetätigung erzielen.

Es sei angemerkt, dass die Definition der oben beschriebenen charakteristischen Aktivierungssituationen für eine automatische Aktivierung der Ausgabe des Anzeigebilds auch im Zusammenhang mit anderen Arten der Erfassung zumindest eines Umgebungsbilds und im Zusammenhang mit anderen Arten der Aufbereitung und Präsentation des Anzeigebilds vorteilhaft ist.

Die obigen Ausführungen gehen - orientiert an der überwiegenden Ausrichtung des Stands der Technik - ohne Beschränkung der Allgemeinheit aus von einem Seitensichtsystem mit im vorderen Fahrzeugbereich angeordneten Seitenkameras sowie von der selbsttätigen Aktivierung bei einem "Vorwärtsausfahren" bzw. "Vorwärtsdurchfahren" usw. Der Kerngedanke der Erfindung ist jedoch sinngemäß übertragbar bzw. anwendbar auf eine selbsttätige Aktivierung der Ausgabe eines Anzeigebilds bei einem Seitensichtsystem mit Seitenkameras, die im Heckbereich des Kraftfahrzeugs angeordnet sind, bzw. bei - beispielsweise - einem Rückwärtsausfahren.

## Patentansprüche

1. Verfahren zur Fahrerinformation in einem Kraftfahrzeug,
bei dem durch zwei Seitenkameras, die an gegenüberliegenden Seiten des Kraftfahrzeugs jeweils an einer weit vorne am Kraftfahrzeug befindlichen Aufnahmeposition an dem Kraftfahrzeug angebracht sind und im Wesentlichen senkrecht zur Fahrtrichtung des Kraftfahrzeugs ausgerichtet sind, jeweils ein Umgebungsbild aufgenommen wird, welches einen im Wesentlichen seitlich bezüglich des Kraftfahrzeugs angeordneten Aufnahmebereich enthält, und bei dem auf einer vom Fahrer des Kraftfahrzeugs einsehbaren Anzeigeeinheit ein Anzeigebild ausgegeben wird, welches eine gegebenenfalls grafisch aufbereitete, vorzugsweise im Wesentlichen fotorealistische, Wiedergabe des Umgebungsbilds umfasst,
bei dem auf Basis von Abstandssignalen zumindest eines ultraschallbasierten Parkhilfesystems eine Blickverdeckungssituation detektiert wird, in der eine seitliche Blickverdeckung des Fahrers anzunehmen ist,
und bei dem die gleichzeitige Ausgabe der beiden Anzeigebilder nur temporär im Falle einer seitlichen Blickverdeckung erfolgt und auf die Detektion der Blickverdeckungssituation hin selbsttätig gestartet wird.

2. Verfahren nach Anspruch 1, **dadurch gekennzeichnet,**
**dass** auch die Aufnahme der Umgebungsbilder nur temporär erfolgt und
**dass** auf die Detektion der Blickverdeckungssituation hin die Aufnahme der Umgebungsbilder gestartet wird.

3. Verfahren nach einem der Ansprüche 1 oder 2, **dadurch gekennzeichnet,**
**dass** die Detektion der Blickverdeckungssituation zudem auf Ergebnissen einer Bildverarbeitung des Umgebungsbilds zumindest einer der Seitenkameras beruht.

4. Verfahren nach Anspruch 3, **dadurch gekennzeichnet,**
**dass** die Bildverarbeitung ein Motion-Stereo-Verfahren umfasst.

5. Verfahren nach einem der Ansprüche 1 bis 4, **dadurch gekennzeichnet,**
**dass** die Detektion der Blickverdeckungssituation zudem auf dem Ergebnis einer Bestimmung der Fahrgeschwindigkeit des Kraftfahrzeugs beruht.

6. Verfahren nach einem der Ansprüche 1 bis 5, **dadurch gekennzeichnet,**
**dass** die Detektion der Blickverdeckungssituation zudem auf dem Ergebnis einer Bestimmung des Lenkwinkels des Kraftfahrzeugs beruht.

7. Verfahren nach einem der Ansprüche 1 bis 6, **dadurch gekennzeichnet,**
**dass** die Detektion der Blickverdeckungssituation zudem auf dem Ergebnis einer Bestimmung der Gangwahl des Kraftfahrzeugs beruht.

8. Verfahren nach einem der Ansprüche 1 bis 7, **dadurch gekennzeichnet,**
**dass** die Detektion der Blickverdeckungssituation zudem auf dem Ergebnis einer Bestimmung der geographischen Position des Kraftfahrzeugs beruht.

9. Verfahren nach Anspruch 8, **dadurch gekennzeichnet,**
**dass** bei dem Kraftfahrzeug eine Historie von Geotags erstellbar ist, an denen die Ausgabe der Anzeigebilder in der Vergangenheit typischerweise manuell gestartet worden ist und dass die Ausgabe der Anzeigebilder selbsttätig gestartet wird, wenn das Kraftfahrzeug eine von mehreren vorgegebenen geographischen Positionen erreicht.

10. Verfahren nach einem der Ansprüche 1 bis 9, **dadurch gekennzeichnet,**
**dass** mit Hilfe des ultraschallbasierten Parkhilfesystems Hindernisse in der Umgebung des Kraftfahrzeugs detektiert und klassifiziert werden und
**dass** die Detektion der Blickverdeckungssituation auf dem Ergebnis einer Bestimmung der Anwesenheit zumindest eines Hindernisses einer bestimmten Klasse und dessen relativer Position zu dem Kraftfahrzeug beruht.

## Claims

1. A driver information method in a motor vehicle, wherein an image of the surroundings is recorded in each case by two side cameras, which are attached to the motor vehicle on opposing sides of the motor vehicle, in each case at a recording position located a long way forward on the motor vehicle, and are oriented substantially perpendicular to the travel direction of the motor vehicle, said image of the surroundings containing a recording region arranged substantially laterally with respect to the motor vehicle, and wherein on a display unit visible by the driver of the motor vehicle, a display image is output, which comprises an, if appropriate, graphically prepared, preferably substantially photo-realistic, reproduction of the image of the environment, wherein, based on distance signals of at least one ultrasound-based parking assistance system, an obstructed view situation is detected, in which an obstructed lateral view of the driver is to be assumed, and wherein the simultaneous output of the two display images only takes place temporarily in the case of an obstructed lateral view and is started automatically upon the detection of the obstructed view situation.

2. A method according to claim 1, **characterised in that** the recording of the images of the surroundings also only takes place temporarily and **in that** the recording of the images of the surroundings is started upon the detection of the obstructed view situation.

3. A method according to either of claims 1 or 2, **characterised in that** the detection of the obstructed view situation is also based on results of an image processing of the image of the surroundings, at least of one of the side cameras.

4. A method according to claim 3, **characterised in that** the image processing comprises a motion-stereo method.

5. A method according to any one of claims 1 to 4, **characterised in that** the detection of the obstructed view situation is also based on the result of a determination of the travelling speed of the motor vehicle.

6. A method according to any one of claims 1 to 5, **characterised in that** the detection of the obstructed view situation is also based on the result of a determination of the steering angle of the motor vehicle.

7. A method according to any one of claims 1 to 6, **characterised in that** the detection of the obstructed view situation is also based on the result of a determination of the gear selection of the motor vehicle.

8. A method according to any one of claims 1 to 7, **characterised in that** the detection of the obstructed view situation is also based on the result of a determination of the geographic position of the motor vehicle.

9. A method according to claim 8, **characterised in that** a history of geotags, on which the outputting of the display images has typically been started manually in the past, can be set up in the motor vehicle, and **in that** the outputting of the display images is automatically started when the motor vehicle reaches one of a plurality of predetermined geographic positions.

10. A method according to any one of claims 1 to 9, **characterised in that** obstacles in the surroundings of the motor vehicle are detected and classified with the aid of the ultrasound-based parking assistance system and **in that** the detection of the obstructed view situation is based on the result of a determination of the presence of at least one obstacle of a specific class and its relative position to the motor vehicle.

## Revendications

1. Procédé d'information du conducteur d'un véhicule selon lequel, deux caméras latérales qui sont respectivement montées sur le véhicule sur des côtés opposées de ce véhicule, dans une position de prise de vue située très en avant du véhicule, et sont essentiellement dirigées perpendiculairement à la direction de déplacement du véhicule, prennent respectivement une image de l'environnement qui contient un domaine de prise de vue situé essentiellement latéralement par rapport au véhicule, selon lequel sur une unité d'affichage visible par le conducteur du véhicule est délivrée une image d'affichage qui contient une reproduction de l'image de l'environnement le cas échéant traitée graphiquement, de préférence de manière photo-réaliste, selon lequel à partir de signaux de distance d'au moins un système d'assistance au stationnement fondé sur des ultrasons est détectée une situation de dissimulation de vision dans laquelle une dissimulation de vision latérale du conducteur doit être supposée, et selon lequel la délivrance simultanée des deux images d'affichage n'est effectuée que temporairement dans le cas d'une dissimulation de vision latérale, et commence automatiquement lors de la détection d'une situation de dissimulation de vision.

2. Procédé conforme à la revendication 1,
**caractérisé en ce que**
la prise des images de l'environnement n'est également effectuée que temporairement et commence lors de la détection d'une situation de dissimulation de vision.

3. Procédé conforme à l'une des revendications 1 et 2,
**caractérisé en ce que**
la détection de la situation de dissimulation de vision concerne en outre des résultats d'un traitement de l'image de l'environnement d'au moins l'une des caméras latérales.

4. Procédé conforme à la revendication 3,
**caractérisé en ce que**
le traitement d'image comporte un procédé de stéréo-mouvement.

5. Procédé conforme à l'une des revendications 1 à 4,
**caractérisé en ce que**
la détection de la situation de dissimulation de vision concerne en outre le résultat d'une estimation de la vitesse de déplacement du véhicule.

6. Procédé conforme à l'une des revendications 1 à 5,
**caractérisé en ce que**
la détection de la situation de dissimulation de vision concerne en outre le résultat d'une détermination de l'angle de braquage du véhicule.

7. Procédé conforme à l'une des revendications 1 à 6,
**caractérisé en ce que**
la détection de la situation de dissimulation de vision concerne en outre le résultat d'une détermination du choix du rapport de vitesse du véhicule.

8. Procédé conforme à l'une des revendications 1 à 7,
**caractérisé en ce que**
la détection de la situation de dissimulation de vision concerne en outre le résultat d'une détermination de la position géographique du véhicule.

9. Procédé conforme à la revendication 8,
**caractérisé en ce que**
pour le véhicule on peut obtenir un historique de balises géographiques pour lesquelles la délivrance des images d'affichage a commencé de manière typiquement manuelle dans le passé et la délivrance des images d'affichage est commencée automatiquement lorsque le véhicule atteint une position géographique parmi plusieurs positions géographiques prédéfinies.

10. Procédé conforme à l'une des revendications 1 à 9,
**caractérisé en ce qu'**
à l'aide du système d'assistance au stationnement fondé sur des ultrasons on détecte et classifie des obstacles présents dans l'environnement du véhicule, et la détection d'une situation de dissimulation de vision concerne la détermination de la présence d'au moins un obstacle d'une classe déterminée et sa position relative par rapport au véhicule.
